# EUROPEAN PATENT SPECIFICATION

(11) **EP 0 502 864 B1**
(45) Date of publication and mention of the grant of the patent: **12.07.1995**
(21) Application number: 90916440.2
(22) Date of filing: 19.11.1990
(51) Int. Cl.: C08J 9/32, C08L 75/04

(54) **FLEXIBLE COMPOSITION ON THE BASIS OF A BINDER AND AT LEAST ONE FILLER**
FLEXIBLE ZUSAMMENSETZUNG AUF DER BASIS EINES BINDEMITTELS UND MINDESTENS EINES FÜLLSTOFFES
COMPOSITION SOUPLE A BASE D'UNE RESINE DE LIAISON ET D'AU MOINS UNE MATIERE DE REMPLISSAGE

(30) Priority: 24.11.1989 BE 8901257
(43) Date of publication of application: 16.09.1992
(73) Proprietor: GEHA, Naamloze Vennootschap, B-9030 Gent (Mariakerke) (BE)
(72) Inventor: Glorieux, Hugo Albert Maurits, B-9910 Gent (BE)
(74) Representative: Donné, Eddy
(86) International application number: BE9000065
(87) International publication number: WO9108253

(56) References cited:
- EP-A- 0 331 214
- JP-A- 1 104 634
- JP-A-60 224 511
- JP-A-63 191 856

## Description

The present invention concerns the use as a roofcoating or jointfiller of a flexible polyurethane composition which after curing has a possible elongation at break at ambient temperature of at least 50% and which comprises a soft polyurethane binder with a low modulus, a molecular weight above 2000 and a low glass transition temperature and which is sticky at room temperature and has after curing a Shore A hardness of maximum 45 and a great elongation at break under a low tensile strength.

These flexible compositions are usually commercialized and applied in a liquid form and harden in situ.

The soft polyurethane binders are characterised by a great elongation at break under a low tensile strength, e.g. 1000% at 3 N/mm2 and a low glass transition temperature e.g. Tg < 0 degrees Celsius. Therefore these binders are sticky at room temperatures and flexible at low temperatures, manifest a low internal stress, have good adhesion, and have a maximum deformability (cohesion) with a minimum of influence on the adhesion.

Soft, low modulus polyurethane polymers or polymer compositions should be preferred above the hard polyurethanes for many applications.

Hard polyurethanes are strongly ramificated and therefore form hard films. These hard types with a strong ramificated polymer network are mostly used as anti-corrosion protection for metals. Corrosion is caused by water and oxygen; a strong ramification limits their permeability and therefore the corrosion. The lack of flexibility is no problem by these metal substrates.

The situation is completely different for very mobile or mineral substrates as here flexibility is very important. Mineral substrates, for example, need to be protected against erosion and not against corrosion. The low gas permeability and thus the strong ramification are not necessary. Thus flexible compositions are here useful and advisable. The flexible binders with the highest quality are the polyurethanes.

Flexible polyurethanes are normally linear, have a great molecular weight (>2000), a great elongation (250% or more) and result in soft final products.

The adhesion, the elasticity modulus, the elongation, the tear resistance and the internal stress of soft, low modulus polyurethanes are far better than these of hard polyurethanes, but the sticky surface remains however a disadvantage and may limit their application.

Decreasing the stickiness by adding a harder polyurethane type does not offer a solution as properties such as Shore A hardness, elongation, tear resistance and so on decrease considerably at the same time. Consequently the advantages of the soft polyurethane get lost.

Adding conventional fillers gives the same disadvantages. The stickiness decreases but all the advantages of the soft polyurethane get lost.

This applies to mineral and organic powders, such as silicates, titanium dioxide, and polymers in powder-form, as well as to fibres, such as synthetic fibres, expanded mineral fillers or mineral microspheres, such as ceramic microspheres.

The use of fibres as filler results in a rough and not attractive surface of the applied compostion. The fibres, especially synthetic fibres, are badly miscible with the polyurethane binder of the elastic composition in which they disperse unsatisfactorily.

Expanded mineral fillers such as expanded pearlite are used almost exclusively in not elastic compositions for thermal and acoustic insulation.

Hollow microspheres as fillers are used mainly in order to decrease the density of the composition and to improve its applicability.

Most of the conventional fillers also appear to cause great internal stress in the cured composition. This is probably because the fillers hinder the mobility of the macro-molecular segments, for example at shrinkage. This is especially the case for nodular fillers and to a lesser degree for lamellar fillers such as talc.

Consequently, all these well-known fillers increase the internal stress and the Shore A hardness. They reduce the elongation and the tear resistance. Therefore they are disadvantageous in soft elastic compositions and only used in small amounts. Very sticky polyurethanes can not be made useful by adding such fillers without decreasing in a important way the favorable properties of the soft polyurethanes.

The object of the present invention is to remedy these disadvantages and to develop the use as roofcoating or jointfiller of a flexible composition of the meant type that is relatively cheap and stickfree thanks to the filler, that has a higher tear resistance and a better applicability, but of which the Shore A hardness, the modulus, the elongation and the internal stress are fewly higher that when the filler would not be present.

To this end a flexible composition is used as roofcoating or jointfiller which contains besides the above mentioned binder 0.1 to 10 wt% expanded polymerparts with a size of 2 to 300 micrometer.

Such expanded polymerparts are known as such.

There are, for example, expanded vinylidene chloride-acrylonitrile copolymer microspheres available on the market under the name Expancel®.

Applications of these microspheres are described in "Polymers Paint Colour Journal" of 27th November 1985 and 23rd July 1986.

These expanded organic microspheres are used exclusively in water-based compositions such as decorative water-thinable interior housepaints. The intention is mainly to reduce the price and the density and to improve the applicability. The exteriorly use of these microspheres is not recommended because of the sensitivity to U.V.-light.

Consequently it does not seem advisable for a professional to rely on such microspheres as fillers in flexible polyurethane compositions. Furthermore the same disadvantages can be expected as manifest themselves with other microspheres, namely the formation of capillar spaces in the composition.

Through this capillar spaces gasses and vapors can move freely thus substantially decreasing the protecive activity of the composition which relies just on the formation of a gasproof protective layer. Water-vapor, which can damage the composition by fast evaporation or freezing, may also accumulate in these capillar spaces. These spaces also cause a strong decrease in the mechanical properties of the composition. The elongation, the tear resistance and the tensile strenght decrease drastically.

The inventor has surprisingly found that not only the use of such organic microparts in a flexible composition is possible, but also that thes microparts improve moreover the mechanical properties amongst others increase the tear resistance and cause a lower internal stress and are moreover without a significant influence on the softness and elasticity of the binder.

JP-A-63 191 856 discloses the use of polyurethane compositions containing expanded hollow microballoons, for example of polyvinylidene chloride acrylonitrile copolymer, as sealing compositions for porous materials. The expanded parts in the composition would improve the adhesion on pourous materials. The application field is completely different from roofcoatings and jointfillers. Moreover, the polyurethane composition is not a soft flexible composition as according to the invention and plasticizer has to be used to obtain some possible elongation.

In a particular form of embodiment of the invention the expanded polymerparts are microspheres, particularly hollow microspheres.

In a useful form of embodiment of the invention, the composition contains 0,2 to 6 wt% expanded polymerparts.

In a particularly useful form of embodiment of the invention to polymerparts are from vinylidene chloride-acrylonitrile copolymer.

The flexible composition preferably has a possible elongation of at least 100% and preferably more than 200%.

The flexible composition is very useful as a protective coating, for example as a roofcoating.

Another form of embodiment the flexible composition is as a jointfiller, caucking or sealant.

In both cases the composition can be applied in liquid form, which cures afterwards to the wanted hardness.

Especially in these forms of embodiment as a protective coating or a jointfiller, caucking or sealant, prejudices exists against the use of polymerparts as a filler, especially hollow microsheres, because these forms of embodiment are mostly exposed to weather-influences and it is generally assumed that, for example, a coating with expanded polymerparts as a filler is not weather-resitant, has unsatisfactory mechanical properties and, because of its porosity does not fulfil its protective function satisfactory.

In these forms of embodiment, due to the adding of expanded polymerparts, it is possible to use a very soft and sticky binder with for example a Tg < 0 degrees Celsius and a elongation of more than a 1000%. Without this filler it woule be impossible to use such a binder, despite its many advantages, because of its stickiness.

Adding conventional fillers as opposed to the expanded polymerparts offers no solution, considering that the properties such as softness, elongation, tear resistance and so one decrease at the same time enormously. The advantages of the soft polyurethane are get totally lost.

Other particularities and advantages of the invention will appear from the following description of a flexible composition on the basis of a binder and at least one filler according to the invention. This description is only given as example and does not limit the invention.

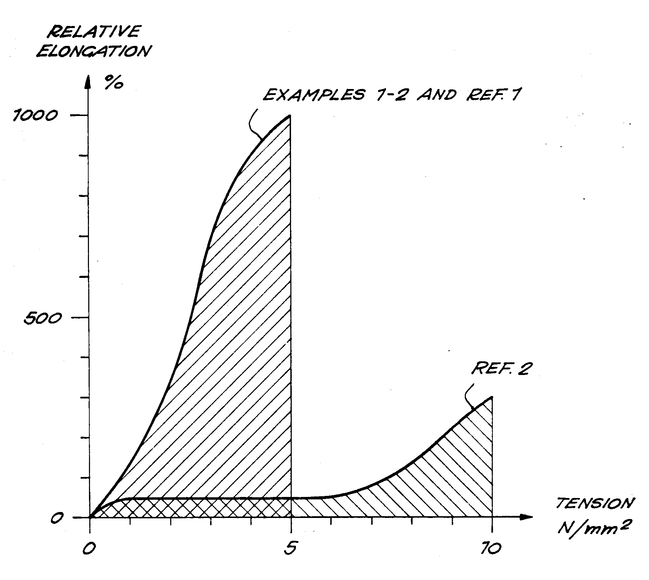

This description refers to the unique drawing which shows a tension/elongation diagram of some compositions according to the invention and some not according to the invention.

A protective coating or a jointfiller, caucking or sealant, according to the invention with, after curing, a possible elongation at ambient temperature of at least 50%, preferably 100%, but most preferably more than 200%, contains mainly a suitable polyurethane binder, 0.1 to 10 wt% expanded polymerparts with a size of 2 to 300 micrometer as filler and possibly other additives.

The usual polyurethane binders can be used as binder for such coatings and sealants. The binder needs to be or to become liquid before or during their fabrication in order to be able to mix the filler and the other additives with it, after which this binder will cure after application. The composition is commercialized with the binder in liquid or partially liquid form and is applied in this form on substrate if the composition has to form a protective coating or adhesive masses or in a hole or joint if the composition has to form a jointfiller, caucking or sealant.

The binders are polyurethanes obtained by reaction of an organic polyisocyanate or ony material which contains two or more free -NCO groups in the molecule and a polyol; or any material containing a plurality of hydroxyl groups. Aliphatic polyurethane binders have a good elasticity, outside resistance, adhesion and water-resistance.

These polyurethanes can be used without solvents. Compositions which contain solvents or diluents and which harden, for example, through physical or oxidative drying or through coalescention usually provide less good properties. Solvents and diluents are generally expensive, toxic, environmentally polluting an inflammable and can affect the underlaying substrates in many cases. Water does not have these disadvantages as a solvent but because of the slow evaporation of water, the composition stays sensitive for a very a long time to humid weather-circumstances. During the formation of the film capillar spaces are formed in the coating so that these coatings can accumulate or let through water. As a result the durability is limited and the adhesion of the composition on a substrate can be disadvantageously influenced. Polyurethanes can be applied without solvents, for example as one-component moisture-cured prepolymers. Two-component polyurethanes have the same properties but need to be mixed before use which makes the application more difficult.

The polyisocyanate may be aliphatic or aromatic. Instead of the polyisocyanates as such a prepolymer may also be used, this is a high molecular weight reaction product obtained through reaction of a polyfunctional compound containing active hydrogen in an excess of polyisocyanate.

Aliphatic polyisocyanates which may be used are amongst others: alkylene diisocyanates such as ethylene diisocyanate, trimethylene diisocyanate and the like; also alkylidene diisocyanates such as ethylidene diisocyanate, butylidene diisocyanate and the like; and furthermore cycloalkylene diisocyanates such as cyclopentylene-1,3-diisocyanate, cyclohexane-1,6-dissocyanate, 3,5,5,-trimethylene cyclohexane-1-isocyanate-3-methylene-isocyanate and the like.

Examples of suitable aromatic polyisocyanates are toluene diisocyanates, naphtylene diisocyanates, xylylene diisocyanates, also m-, p-, methylene- and diphenylene diisocyanates and diphenylmethane diisocyanates.

The isocyanate may be used in amounts ranging from 95 to 200wt% calculated on the stochiometric content of polyol.

As material with several hydroxyl groups to react with the isocyanate, use may be made of hydroxyl polyesters obtained by reaction of a polycarboxylic acid and a polyhydric alcohol; of polyhydric polyalkylene ethers obtained as condensation products of an alkylene oxide with a small amount of a compound containing active hydrogen groups such as water, a glycol or glycerine; of polyhydric polyalkylene thioethers, obtained through the reaction of alkylene oxides with a polyhydric thioether and hydroxyl-terminated diene polymers preferably with about 6 carbon-atoms, eventually substituted in the 2-, and/or 3-positions.

Suitable polyurethanes can also be obtained using hydroxyl-terminated homopolymers and copolymers of butadiene.

The cured polyurethane of the composition can also be prepared from a prepolymer which is a reaction product of polyisocyanate and a polyhydroxy compound such as a hydroxyl-terminated polyester resin, a hydroxyl-terminated polyether or a hydroxyl-terminated polydiene resin. In preparing these prepolymers, an excess of polyisocyanate reacts with the polyhydroxy compound which has a molecular weight of, for example, 200 to 10,000. The reaction product or prepolymer contains then at least two free isocyanate groups per molecule. Such prepolymers contain a multiplicity of free -NCO groups which are capable of reacting in order to harden the composition amongst others under the effect of air moisture.

The expanded polymerparts added as filler to the binder, according to the invention, are preferably microspheres with a diameter of 2 up to 300 micrometer.

Preferably the composition contains from 0,2 to 6 wt% of such microspheres. A larger amount than 6 wt% can, if the expanded microspheres have a low density, for example in the range of 0.06, result in a porous composition.

A very useful polymer for these expanded parts is vinylidene chloride-acrylonitrile copolymer with isobutane as the expanding agent.

Besides these expanded polymerparts the usual additives for flexible compositions such as plasticizers, pigments, other fillers, catalysts, products for improving the adhesion, anti-oxidants, hardeners, viscosity modifying products and even possibly solvents and dispersing agents may be added to the binder.

Products with a relatively low molecular weight which are known in the plastic industry as plasticizers, such as phthalates and chlorinated hydro-carbons, diesters and aromatic oils may be used as plasticizers.

Resins and polymers with a relatively high molecular weight such as coaltars, asphalts, - for example the type used for roofcoatings - polybutenes, hydro-carbon resins and modified hydro-carbon resins, amongst others with derivates and monomers of coal, pinetree or petroleum may be used as plasticizer.

These plasticizers should of course be free of elements which can react with the free -NCO groups of the prepolymer or isocyanate.

Suitable fillers to be added to the polyurethane are amongst others those which are described in "The Development and Use of Polyurethane Products" by E.N. Doyle, published by McGraw-Hill in 1971.

It goes without saying that when pigments and other fillers are added this may only be done in limited amounts and that in any case it is necessary to make sure that these ingredients do not considerably decrease the properties of the flexible composition as compared to a composition without fillers or with only expanded polymerparts as a filler.

In so much as fillers are used they should preferably be hydrophobic. A suitable filler is for instance talc.

The composition may contain 0.5 to 2.5 wt% adhesion promoters, such as for example silanes. They are useful when the composition is applied on smooth substrates such as glass or metal.

Considering that the composition is generally commercialized and applied on a substrate as a liquid it can contain thixotropic agents, such as very fine asbestos fibres, colloidal silicates, and certain clays such as bentonites, in order to improve its applicability.

Insofar as the composition is liquid because the polymerbinder is not completely polymerized, as it is present in the composition in the form of two-components or a prepolymer, it can be useful to add hardener catalysts to the composition.

If the composition consists of a two-component polyurethane the expanded polymerparts and all other fillers and additional ingredients will be added to the polyol component. To the isocyanate a diluent may possibly be added.

The present invention will be illustrated in more detail by the following examples.

### EXAMPLE 1.

One starts with an amount of the binder "Prepolymer A" consisting of a solventless bifunctional moisture-curing aliphatic polyurethane prepolymer, reaction product obtained by reacting a polyetherpolyol in an excess of isophoron diisocyanate containing 3.1 wt% free -NCO groups.

To 600 gr. (85.23 wt%) of this binder is added 4 gr. (0.57 wt%) of hollow expanded microspheres of vinylidene chloride-acrylonitrile copolymer, on the market under the trade mark Expancel 551DE20, 50 gr. (7.10 wt%) carbon-black and 50 gr. (7.10 wt%) of highly dispersed silica. These composition is mixed in the mixing vessel of a disperser of the Cowles type. Mixing is performed during 30 minutes at high revolution number under vacuum. The amount of microspheres correspond to a pigment volume concentration of 10%.

In this manner a useful sealant or coating which hardens under the influence of air-moisture is immediately obtained.

The thus obtained composition is applied with a filmograph on a not adhesive substrate in a dry layer of about 1.5 mm. After a curing-time of at least two weeks the film is removed from the substrate and Shore A hardness is measured in accordance with DIN 53505, the tensile strength and the elongation at break in accordance with DIN 53455 and the tear resistance in accordance with DIN 53507. The results are given in the following TABLE 1.

### EXAMPLE 2.

Example 1 is repeated but 13 gr. hollow expanded microspheres are added, this is a three times higher volume concentration. The pigment volume concentration amounts to 30%. The concentration by weight of the poolymerspheres in relation to the complete composition is 1.83 wt%. The results of the measurement of the obtained composition are also represented in TABLE 1.

### EXAMPLE 3.

Example 2 is repeated but to 600 gr. (81.08 wt%) of "Prepolymer A" 40 gr. (5.4 wt%) of Expancell 551DE20 is added. The results of the measurements are represented in following TABLE 1.

### REFERENCE.

To be able to compare the results, a film of pure "Prepolymer A" with a dry layer thickness of 1.5 mm is made and subjected to the same measurements as described above (reference-example 1).

Furthermore example 1 is repeated but instead of hollow spheres conventional fillers are added.

To 60 parts by weight (60 wt%) of the binder "Prepolymer A", 30 parts by weight (30 wt%) of barium-sulphate as mineral filler, 5 parts by weight (5wt%) of carbon-black and 5 parts by weight (5wt%) of highly dispersed silica are added (reference example 2). This amount corresponds to a pigment volume concentration of 10% of barium-sulphate.

The testresults of the composition with pure "Prepolymer" (ref.1) and with the conventional fillers (ref.2) which are not according with the invention are also represented in TABLE 1.

**TABLE 1**

| EXAMPLE | SHORE A HARDNESS | TENSILE STRENGTH in N/mm2 | ELONGATION AT BREAK in % | TEAR RESISTANCE in N/mm. |
|---|---|---|---|---|
| 1 | 18 | 4.8 | 1010 | 11.3 |
| 2 | 20 | 4.9 | 1030 | 15.4 |
| 3 | 45 | 4.6 | 970 | 18 |
| ref.1 | 14 | 4.9 | 1020 | 5.1 |
| ref.2 | 64 | 9.8 | 270 | 3.2 |

From the table above appears that the mineral filler barium-sulphate from reference example 2 causes an increase of the Shore A hardness and the tensile strength (composition less flexible) and a decrease of the elongation at break and tear resistance (composition weaker).

Example 1 with the same volume concentration filler as reference example 2, but using hollow polymerparts instead of mineral fillers gives little difference in properties with respect to the pure prepolymer from reference example 1; the tear resistance increases enormously.

Example 2 shows that the properties remain almost unchanged when using a three times higher volume concentration of polymerparts.

The properties of the composition according to the examples 1 and 2 and reference examples 1 and 2 are represented in the figure showing the classical tension/elongation diagram and giving thus the tension in function of the relative length change.

Therefrom can be seen that the relation tension/elongation of the pure Prepolymer (ref.1) is almost linear and remains virtually unchanged by the addition of even relatively high volume concentrations of hollow polymerparts. The good deformability of 100% at a low force of 5N/mm2 is maintained in spite of the relatively high volume concentration of about 33% of polymer filler.

The mineral filler from reference example 2 makes the tear resistance increase enormously as opposed to a reduction of the elongation; the composition becomes harder and less deformable.

The shaded areas form the total powersurface which the composition fulfills, or, in other words, they form the total energy necessary to damage the cured composition.

It appears therefrom that it is not the elongation nor the tensile strength that determines at last the strenght of the composition but the partition of these forces which, as can be seen on the diagram, preferably have to permit a great deformation at low tensile strenght. Mineral fillers hinder this and furthermore one obtains a less strong composition, as is evident from the smaller shaded field of the diagram.

All this also appears from the higher tear resistance found in the examples which contain the expanded polymerparts.

The extreme importance appears therefrom of the invention which allows the pigmentation of a soft flexible polymer up to high volume concentrations without loosing, bur rather improving, the properties and preserving its soft, elastic character.

Additionally to these advantages is the low internal stress caused by this filler as appears from the following examples.

### EXAMPLE 4.

To a solventfree trifunctional moisture-curing aliphatic polyurethane prepolymer, reaction product prepared of a polyetherpolyol in an excess of isophoron diisocyanate containing 2.8 wt% free -NCO groups, are successively added increasing volume percentages of hollow expanded microspheres of vinylidene chloride-acrylonitrile copolymer (Expancel). Mixing is performed during 30 minutes at high revolution number under vacuum. Samples are applied with the fimlograph on strips of PVC-folio (Lenatafolio) of 300 micrometer thick, 215 mm long and 82 mm wide in a dry layer thickness of 500 micrometer. After 24 hours curing the strips are cut to a length of 210 mm and a width of 78 mm. The curing happens at 20 degrees Celsius and 55 % relative humidity, lying loose on a glass plate.

The internal stress is measured as follows.

The internal stress which originates in the coating whilst curing causes the samples and their PVC-substrate to curve. The greater the tension, the stronger the curvature and the bigger the angle formed with the glass plate. The value of this angle expressed in degrees expresses the value of the internal stress developed in the samples where 0 degrees is flat and tensionless and 90 degrees the vertical position in relation to the glass plate.

The comparative internal stress in degrees is shown in following table 2.

**TABLE 2**

| | | | | | | |
|---|---|---|---|---|---|---|
| Pigment volume concentration of microspheres | 5 | 15 | 25 | 35 | 45 | 55 |
| Angle in degrees | 0 | 0 | 5 | 7 | 11 | 8.8 |

As a matter of comparison example 4 is repeated by adding talc instead of the microspheres.

The comparative internal stress in degrees is represented in following table 3.

**TABLE 3**

| | | | | | | |
|---|---|---|---|---|---|---|
| Pigment volume concentration of talc | 5 | 15 | 25 | 35 | 45 | 55 |
| Angle in degrees | 0 | 10,5 | 12,9 | 22 | 24,1 | 18,4 |

The comparative tests are executed in relation to the kind of mineral filler which causes the lowest internal stress, namely talc. Thereby it can be concluded without doubts that the organic microsperes, as used in the present invention, are the filler which causes the lowest internal stress for a same pigment volume concentration. As the critical pigment volume concentration in this composition lies at 48%, the highest internal stress can be expected at a pigment volume concentration of 45%. Above the critical pigment volume concentration the compositions become porous. This is the reason why in both cases the internal stress decreases at a pigment volume concentration of 55% which for the microspheres corresponds to 6 wt% microspheres calculated on the cured composition.

Furthermore it appears that for an identical composition the organic microspheres used in the present invention, from a pigment volume concentration of 25% on, cause practically no increase of the internal stress and that the latter, with this pigment volume concentration, is still significantly lower than the internal stress caused by talc with a pigment volume concentration of hardly 15%.

With the same pigment volume concentration of 45% the talc causes a tension angle of 24.1 degrees and the microspheres an angle of only 11 degrees.

The maximum quantity of the microspheres Expancel® 551DE20 which can be added without causing a porous final product is about 6 wt%. A proportion of 94 parts by weight of prepolymer and 6 parts by weight of Expancel 551DE20, which means 6 wt% Expancel 551DE20, gives a critical pigment volume concentration of 99.21%. At this concentration the composition is still not porous. Only polymerparts which are less expanded can have a higher density, for example 0.09 instead of 0.062 which has Expancel 551DE20. Therefore these heavier parts can be added up to 10 wt% without exceeding the critical pigment volume concentration and without reducing the quality of the composition.

The scope of the present invention is not limited to the forms of embodiment described herebefore and within the scope of the patent as claimed many changes may be made to the described forms of embodiment.

## Claims

1. Use as a roofcoating or jointfiller of a flexible polyurethane composition which after curing has an elongation property at break at ambient temperature of at least 50% and which comprises a soft polyurethane binder with a low modulus, a molecular weight above 2000 and a low glass transition temperature and which is sticky at room temperature and has after curing a Shore A hardness of maximum 45 and a great elongation at break under a low tensile strength and at least 0.1 to 10 wt% expanded polymerparts with a size of 2 to 300 micrometer as filler.

2. Use according to claim 1, characterised in that the expanded polymerparts are microspheres.

3. Use according to claim 2, characterised in that the expanded polymerparts are hollow microspheres.

4. Use according to any one of the preceding claims, characterised in that the composition contains 0.2 to about 6 wt% expanded polymerparts.

5. Use according to any one of the preceding claims, characterised in that the polymerparts are made from vinylidene chloride acrylonitrile copolymer.

6. Use according to any one of the preceding claims, characterised in that the composition has a possible elongation at ambient temperature of at least 100%.

7. Use according to any one of the preceding claims, characterised in that the binder is a polyurethane polymer.

8. Use according to any one of claims 1 to 6, characterised in that the binder is a polyurethane prepolymer.

## Patentansprüche

1. Verwendung einer flexiblen Zusammensetzung als Dachbelag oder Fugenfüller, welche Zusammensetzung nach dem Aushärten eine Dehnungseigenschaft bis zum Bruch bei Umgebungstemperatur von zumindest 50% hat und welche einen weichen Polyurethanbinder mit einem niedrigen Modul, einem Molekulargewicht über 2000 und einer niedrigen Glasumwandlungstemperatur umfaßt und die bei Zimmertemperatur klebrig ist und nach dem Aushärten eine Shore A - Härte von maximal 45 und eine große Dehnung bis zum Bruch unter einer geringen Zugstärke und zumindest 0,1 bis 10 Gewichtsprozent expandierter Polymerpartikel mit einer Größe von 2 bis 300 Mikrometer als Füllstoff hat.

2. Verwendung gemäß Anspruch 1, dadurch gekennzeichnet, daß die expandierten Polymerpartikel Mikrokügelchen sind.

3. Verwendung gemäß Anspruch 2, dadurch gekennzeichnet, daß die expandierten Polymerpartikel hohle Mikrokügelchen sind.

4. Verwendung gemäß irgendeinem der vorangehenden Ansprüche, dadurch gekennzeichnet, daß die Zusammensetzung 0,2 bis etwa 6 Gewichtsprozent expandierter Polymerpartikel enthält.

5. Verwendung gemäß irgendeinem der vorangehenden Ansprüche, dadurch gekennzeichnet, daß die Polymerpartikel aus Vinylidenchlorid-Acrylonitril-Copolymer hergestellt sind.

6. Verwendung gemäß irgendeinem der vorangehenden Ansprüche, dadurch gekennzeichnet, daß die Zusammensetzung eine mögliche Dehnung bei Umgebungstemperatur von zumindest 100% hat.

7. Verwendung gemäß irgendeinem der vorangehenden Ansprüche, dadurch gekennzeichnet, daß der Binder ein Polyurethanpolymer ist.

8. Verwendung gemäß irgendeinem der Ansprüche 1 bis 6, dadurch gekennzeichnet, daß der Binder ein Polyurethanpräpolymer ist.

## Revendications

1. Utilisation comme revêtement pour toitures ou comme pâte d'étanchéité pour joints d'une composition souple de polyuréthanne, qui possède, après durcissement, une propriété d'allongement à la rupture à la température ambiante d'au moins 50% et qui comprend un liant mou de polyuréthanne possédant un faible module, un poids moléculaire supérieur à 2000 et une basse température de transition vitreuse et qui est collante à la température ambiante et possède, après durcissement, une dureté Shore A de maximum 45, ainsi qu'un grand allongement à la rupture, tout en manifestant une faible résistance à la traction, et au moins de 0,1 à 10% en poids d'éléments polymères expansés dont la dimension est de 2 à 300 micromètres, comme matière de charge.

2. Utilisation selon la revendication 1, caractérisée en ce que les éléments polymères expansés sont des microsphères.

3. Utilisation selon la revendication 2, caractérisée en ce que les éléments polymères expansés sont des microsphères creuses.

4. Utilisation selon l'une quelconque des revendications précédentes, caractérisée en ce que la composition contient de 0,2 à environ 6% en poids d'éléments polymères expanses.

5. Utilisation selon l'une quelconque des revendications précédentes, en ce que les éléments polymères sont réalisés à partir d'un copolymère de chlorure de vinylidène/acrylonitrile.

6. Utilisation selon l'une quelconque des revendications précédentes, caractérisée en ce que la composition possède un allongement possible à la température ambiante d'au moins 100%.

7. Utilisation selon l'une quelconque des revendications précédentes, caractérisée en ce que le liant est un polymère de polyuréthanne.

8. Utilisation selon l'une quelconque des revendications 1 à 6, caractérisée en ce que le liant est un prépolymère de polyuréthanne.
